# EUROPEAN PATENT APPLICATION

(11) **EP 1 058 243 A1**
(43) Date of publication of application: **06.12.2000**
(21) Application number: 00111499.0
(22) Date of filing: 29.05.2000
(51) Int. Cl.: G11B 7/085, G11B 21/04, G11B 5/55

(54) **System for recording and reproducing information**

(30) Priority: 31.05.1999 JP 15202199
(71) Applicant: Pioneer Corporation, Meguro-ku, Tokyo (JP)
(72) Inventor: Hoshinaka, Eiji, c/o Tokorozawa Koujou, Tokorozawa-shi, Saitama-ken 359-8522 (JP); Takagi, Keiichi, c/o Tokorozawa Koujou, Tokorozawa-shi, Saitama-ken 359-8522 (JP); Kaneko, Toshiyuki, c/o Tokorozawa Koujou, Tokorozawa-shi, Saitama-ken 359-8522 (JP); Ishii, Katsumi, c/o Tokorozawa Koujou, Tokorozawa-shi, Saitama-ken 359-8522 (JP)
(74) Representative: Sajda, Wolf E., Dipl.-Phys.

(57) **Abstract**

A transmitting member (18) is mounted between a pickup (16) slidably supported along guide shafts (13, 14) and a feeding screw (15) having a helical groove on a peripheral surface thereof. A turning force of the feeding screw (15) is transmitted to the pickup (16) through the transmitting member (18) so that the pickup (16) is transferred to a side of an information recording and reproducing medium. Tooth portions (24, 25) engaged with the helical groove are formed at one end of the transmitting member (18). A regulating portion (21) is formed at a side opposed with the tooth portions (24, 25) through the feeding screw (15), namely the feeding screw (15) is disposed between the tooth portions (24, 25) and the regulating portion (21). There is provided a gap (D2) between the peripheral surface of the feeding screw (15) and the regulating portion (21), which is shorter than a depth (P) of the helical groove. This construction enables the feeding screw (15) to smoothly rotate, and further allows the regulating portion (21) to regulate the displacement of the feeding screw (15) when an external shock is exerted on the system (9), namely the engaging condition between the helical groove and the tooth portion (24, 25) is always kept. Thus, transferring means of the pickup (16) robust against external shocks can be provided.

## Description

### BACKGROUND OF THE INVENTION

The present invention relates to a system for recording and reproducing information for recording and/or reading information using an information recording/ reproducing medium such as an optical disc.

There has been, in recent years, developed optical discs such as CD (Compact Disc), DVD (Digital Video Disc or Digital Versatile Disc) and MD (Mini Disc) as medium capable of recording a large capacity of information at high-density and convenient for carrying.

These optical discs are classified in one for reading (reproducing) information only, one for being capable of writing (recording) once only and one for being capable of always both reading and writing. Any optical disc is capable of reproducing information recorded at high-density or recording information at high-density by a system for recording and reproducing information with high-accuracy of optical technique and a pickup having a precise mechanism.

In general, the system for recording and reproducing information is provided with a rotating mechanism for rotating the optical disc at a predetermined clamping position with a predetermined speed, and a transferring mechanism for controlling a reproducing position or a recording position of a pickup in relation to the optical disc through transferring the pickup ahead and backward in the radial direction of the optical disc.

The transferring mechanism is provided with guide shafts which supports the pickup slidably and are extended to the direction of the clamping position, a feeding screw combined with the guide shafts, an engaging means an end of which is engaged with the feeding screw and another end is secured with the pickup, and an electric motor for driving the feeding screw in a reciprocally rotatable manner. A driving force of the electric motor is transmitted to the pickup via the feeding screw and the engaging means so that the pickup can be moved ahead and backward in relation to the optical disc to be read out and written in.

Therefore, it is required to transfer the pickup with high-accuracy to the optical disc in order to read the information recorded at high-density with high-accuracy or to record the information at the high-density with high-accuracy. In particular, it is very important in this operation to always constantly keep a high engaging accuracy between the engaging means as a movable mechanism and the feeding screw so as to transfer the pickup to an adequate position corresponding to a rotational angle of the feeding screw.

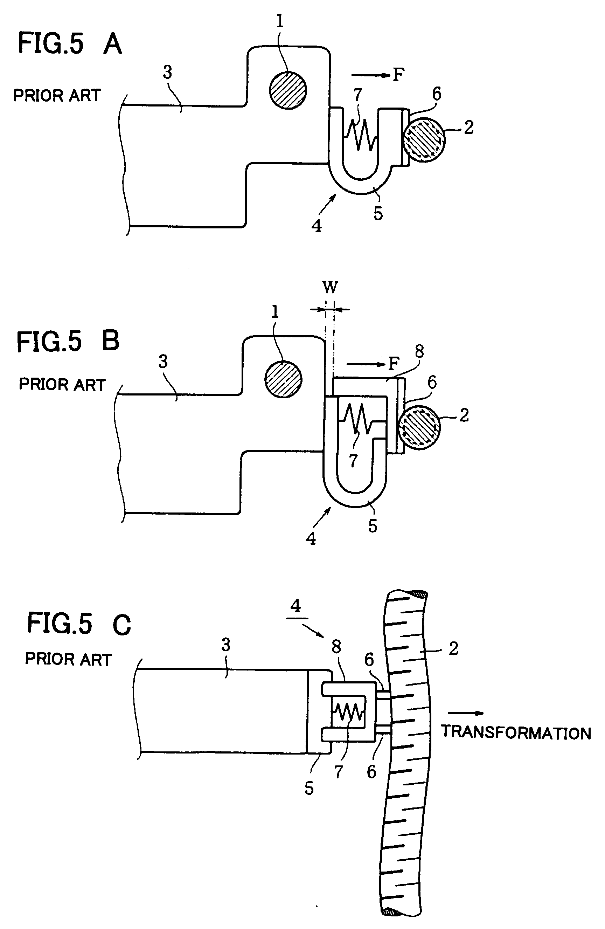

Figs. 5A, 5B and 5C are side views for showing a conventional transferring mechanism designed for improving the above-mentioned engaging accuracy. In Fig. 5A, the above-mentioned guide shaft 1 and feeding screw 2 are extended in the direction of the clamping position. A pickup 3 is supported slidably. An engaging means 4 is mounted between the pickup 3 and the feeding screw 2. The engaging means 4 comprises a teeth portion 6, a nut 5 secured with the pickup 3, and a spring 7. Both the nut 5 and the spring 7 press the teeth portion 6 to a helical groove of the feeding screw 2 with the suitable force F, so that the pressure can prevent a mechanical vibration between the teeth portion 6 and the helical groove from occurring.

However, in the transferring mechanism as shown in Fig. 5A, the teeth portion 6 is moved in the left direction of the drawing in the case that an external shock is exerted from outside to the engaging means 4 with force exceeding a pressing force of the spring 7. As a result, the teeth portion 6 may get stuck on the feeding screw 2 out of the helical groove, so that it becomes impossible to transfer the pickup 3 with high-accuracy corresponding to the rotational angle of the feeding screw 2.

Then, in order to improve this disadvantage, the transferring mechanism as shown in Fig. 5B was proposed. This transferring mechanism has the nut 5 and the teeth portion 6 both of which are formed independently. The teeth portion 6 is integrally formed with a stopper member 8 which is supported on the nut 5 with a predetermined gap W between the pickup 3 and itself, and has an inverted L-shape. Further, the spring 7 provided between the nut 5 and the stopper member 8 presses the teeth portion 6 to the helical groove of the feeding screw 2 with the suitable force F.

In this transferring mechanism, the stopper member 8 can move by the gap W in the opposite direction against the pressing force F of the spring 7. Thus, even if any external shock is exerted to the pickup 3 and the like, the stopper member 8 moves to the side of the gap W, so that it can be avoided that the teeth portion 6 moves in the left direction of the drawing to get stuck on the feeding screw out of the helical groove.

In such a way, there have been proposed a plurality kind of transferring mechanisms in order to transfer the pickup with high-accuracy. These transferring mechanisms, however, have been designed without considering that the feeding screw may be transformed. In the other words, assuming that the shape of the feeding screw does not change, the conventional mechanisms press the teeth portion 6 to the helical groove of the feeding screw 2 through the spring 7.

However, in fact, the shape of the feeding screw 2 changes due to an opposite force from the teeth portion 6 when an external force such as a shock is exerted to the transferring mechanism. For example, Fig. 5C, which is a plane view of Fig. 5B, shows a problem that the teeth portion 6 may get stuck on the feeding screw out of the helical groove because of a transformation of the feeding screw 2 and thus a movement of the helical groove in the direction of the arrow therein.

In the case that the relatively small external shock is exerted, the engaging relationship between the teeth portion 6 and the feeding screw 2 may be restored after the teeth portion 6 is stuck on the feeding screw 2 out of the helical groove. In such a way, if it becomes possible to transfer the pickup 3 again, that may be no problem as a function of the transferring mechanism. However, in the case that the teeth portion 6 is entirely stuck on the feeding screw 2 out of the helical groove due to the relatively large external shock, no rotational force of the feeding screw 2 is transmitted to the pickup 3 via the teeth portion 6, so that it becomes impossible to record information on an optical disc or to reproduce intonation from the optical disc through the pickup 3.

In addition, in the case that there occurs a very shock while transferring the pickup 3 along the guide shafts 1, and then the feeding screw 2 is transformed so much, the teeth portion 6 may pass through a plurality of helical grooves without engaging. As a result, it may occur that the pickup 3 severely bumps against a stopper (not shown) which is provided for limiting a range of transferring span of the pickup 3. This bump may cause an optical system of the pickup 3 to be broken, or an optical shaft of the optical system to be deviated so that the accuracy of recording and reproducing intonation is deteriorated.

Moreover, in the case of an information recording and reproducing system using the DVD which has a large capacity of information exceeding ten and several gigabytes and is expected as an intonation recording and reproducing medium of next generation, even a slight transformation of the feeding screw 2 causes the accuracy of recording and reproducing the pickup 3 to be deteriorated. Therefore, it has recently been strongly hoped to develop a transferring mechanism being robust against an external shock.

In addition, a light weight of feeding screw is now required since it is an emergency subject today to reciprocate the pickup at high-speed for the DVD capable of recording and reproducing a large amount of intonation, and further provide a small type of intonation recording and reproducing system without increasing consumed electricity of the electric motor to rotate the feeding screw. In this point also, the feeding screw is apt to be transformed due to being suffered from the external shock. Therefore, it has been a very important subject matter to develop the transferring mechanism to be robust against the external shock with high-accuracy of transferring.

### SUMMARY OF THE INVENTION

An object of the present invention is to provide a system for recording and reproducing information having a transferring means which is robust against an external shock and can transfer a pickup with high-accuracy.

According to the present invention, there is provided a system for recording and reproducing information having at least one of an information reading means for reading information from an information recording and reproducing medium and an information recording means for recording information on the information recording and reproducing medium, and a transferring means for transferring at least one of the information reading means and the information recording means and for changing a position thereof to the information recording and reproducing medium, the transferring means comprising a feeding screw having a helical groove on a peripheral surface thereof with a cylindrical shape, an engaging portion for engaging with the helical groove, and a regulating portion for regulating a displacement of the feeding screw caused by engaging with the engaging portion.

According to such a construction, even if, for example, an external force such as a shock is exerted upon the transferring means, and a displacement including a transformation occurs on the feeding screw, the regulating portion can regulate an expansion of the displacement of the feeding screw. Namely, it can be previously prevented that the engaging portion gets stuck over and is deviated from the helical groove formed on the feeding screw. In the other words, the engaging condition between the engaging portion and the helical groove can be always kept so that the information reading means and/or information recording means can be exactly transferred corresponding to a rotational angle of the feeding screw.

Next, the regulating portion is disposed in the opposite side to the engaging portion through the feeding screw. According to such a construction, when the feeding screw is displaced, the occurrence of displacement can be regulated by the regulating portion disposed in the opposite side to the engaging portion. Thereby, it can be previously prevented that the engaging portion gets stuck on the feeding screw, so that the engaging condition between the engaging portion and the helical groove is always kept.

Further, the regulating portion and the feeding screw are disposed with a predetermined interval between them. According to such a construction, the displacement of the feeding screw is allowed within a predetermined range, but not allowed exceeding the predetermined range.

In addition to the above described, the interval between the regulation portion and the feeding screw is set to be shorter than a depth of the helical groove. According to such a construction, the allowed range of displacement is limited within the depth of the helical groove. Thereby, it can be previously prevented that the engaging portion gets stuck on the feeding screw, so that the engaging condition between the engaging portion and the helical groove is always kept.

According to these constructions of the present invention, provided is a system for recording and reproducing information which is robust against any shock from outside, and can read and record information from or on high-density information recording and reproducing medium with high-accuracy.

### BRIEF DESCRIPTION OF THE DRAWINGS

These and other objects and advantages of the present invention will become clear from the following description with reference to the accompanying drawings, wherein:
Fig. 1 is a perspective view schematically showing a structure of a system for recording and reproducing information provided with a transferring mechanism of the present invention;
Figs. 2A to 2D show a structure of a transmitting member;
Figs. 3A to 3C are enlarged views schematically showing a structure of the transmitting member;
Figs. 4A and 4B are perspective views showing a shape of a tooth portion; and
Figs. 5A to 5C are explanatory views showing a structure of a conventional transferring mechanism and problems thereof.

### DETAILED DESCRIPTION OF THE PREFERRED EMBODIMENT

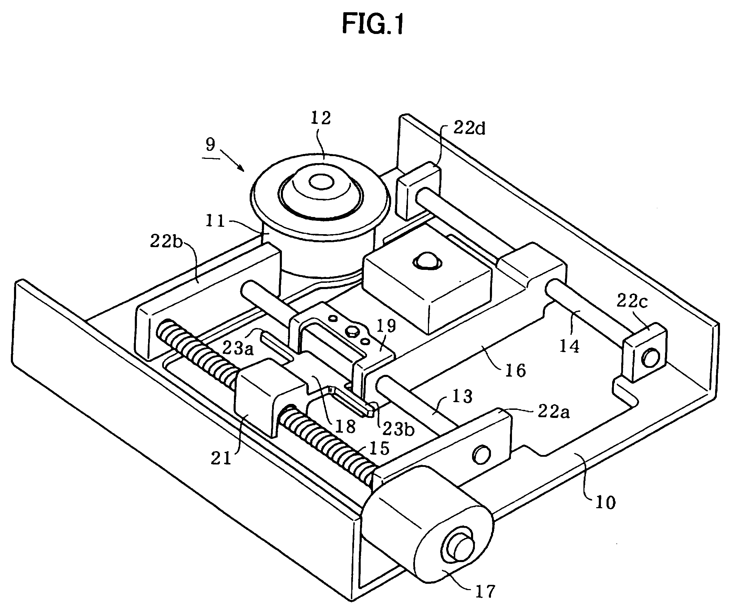

Fig. 1 shows an information recording and reproducing system 9 in which a rotating mechanism for rotatably supporting an optical disc as an information recording and reproducing medium, such as CD or DVD and a transferring mechanism for transferring a pickup ahead and backward substantially along the radial direction of the optical disc are mounted on a chassis 10.

The above described rotating mechanism comprises a direct drive type of driving motor 11 secured to the chassis 10 and a turntable 12 directly connected to a rotational shaft (not shown) of the driving motor 11. The turntable 12 is provided at a so-called clamping position and rotates the optical disc mounted thereon through receiving a turning force of the driving motor 11.

The above described transferring mechanism comprises a pair of guide shafts 13, 14 which are parallel with each other and are extended to a side of the turntable 12, and a feeding screw 15 which is disposed parallel with the guide shafts 13, 14. The guide shafts 13, 14 supports a pickup 16 so as to move ahead and backward freely.

A kind of pickup may be selected according to a kind of optical disc to be applied, for example, a pickup as either information reading means or information recording means, or a pickup as both information reading and recording means. Also, the guide shafts 13, 14 and the feeding screw 15 are rotatably supported by bearing portions 22a-22d stood up on the chassis 10.

Moreover, the transferring mechanism is further provided with a stepping motor 17 which permits the feeding screw 15 to be reciprocally rotatable and a transmitting member 18 for transmitting a turning force of the feeding screw 15 to the pickup 16. The feeding screw 15 is directly connected to a rotational shaft (not shown) of the stepping motor 17.

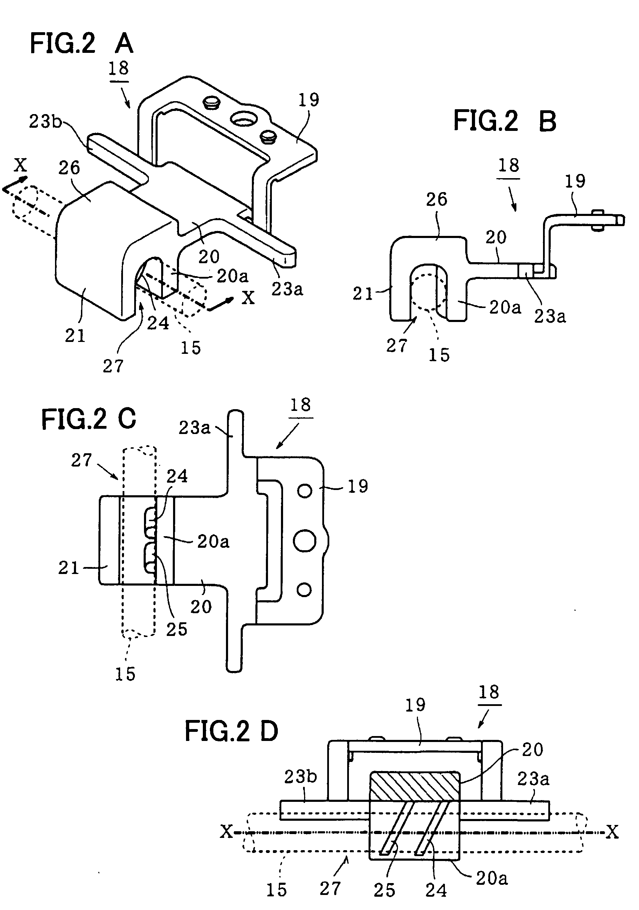

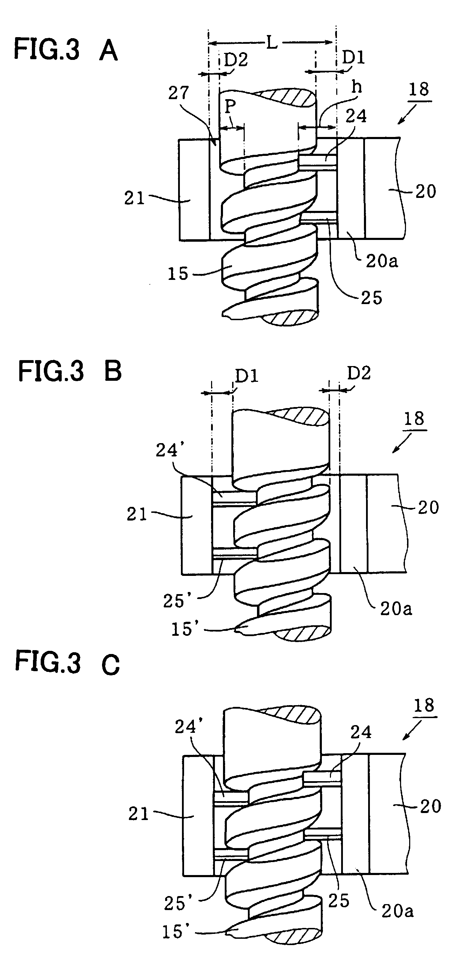

Next, a construction of the transmitting member 18 will be explained based on Figs. 2A to 2C. Moreover, Fig. 2A is a perspective view showing a construction of the transmitting member 18 from outside, Fig. 2B is a side view thereof, Fig. 3C is a bottom view thereof, and Fig. 3D is an explanatory view showing a shape of a tooth portion provided in the transmitting member 18.

In Figs. 2A and 2B, the transmitting member 18 is integrally formed with hard material such as engineering plastic or metal material, being provided with a "L" shape of fixed portion 19 secured to an end of the pickup 16 by screwing them, an engaging portion 20 projected out from the fixed portion 19, and a regulating portion 21 connected to a tip of the engaging portion 20.

Further, a shape of the engaging portion 20 will be described in detail based on Figs. 2C and 2D. Provided in the neighborhood of the fixed portion 19 are stopper projections 23a, 23b which extends along the longitudinal direction of the feeding screw 15. Also, provided on a tip portion 20a of the engaging portion 20 are a pair of tooth portions 24, 25 which are engaged with a helical groove formed on the feeding screw 15. In addition, the tooth portions 24, 25 equally incline at a predetermined angle corresponding to a shape of the helical groove, and also a tip portion thereof is formed in convex shape fitted to a shape of root of the helical groove.

The regulating portion 21 is opposed against the tip portion 20a of the engaging portion 20 with a predetermined interval L as shown in Fig. 3A, and is formed integrally with a bridging portion 26 outwardly extending from the tip portion 20a.

In this transmitting member 18, the fixed portion 19 is secured to the pickup 16, and the feeding screw 15 passes through a concave guide hole 27, which is formed by the tip portion 20a, the bridging portion 26, and the regulating portion 21, wherein the helical groove on the feeding screw is engaged with the tooth portions 24, 25 mounted on the tip portion 20a as shown in Figs. 2A and 3A.

Further, as shown in Fig. 3A, a tooth pitch h of the tooth portions 24, 25 is longer than a depth P of the helical groove of the feeding screw 15. Accordingly, when the tooth portions 24, 25 are engaged with the helical groove of the feeding screw 15, only each tip of the tooth portions 24, 25 is engaged with the helical groove, and the tip portion 20a of the engaging portion 20 does not contact with ridge surfaces of the feeding screw 15 since there is a gap of a predetermined interval D1 between them. Further, under this situation, there is also provided a gap between the ridge surfaces of the feeding screw 15 and the regulating portion 21 with a predetermined interval D2 which is shorter than the depth P of the helical groove.

Upon these constructions, when the feeding screw 15 is allowed to reciprocally rotate by the stepping motor 17, the turning force from the feeding screw 15 is transmitted to the transmitting member 18 and then the pickup 16 through the tooth portions 24, 25. Thereby, the pickup 16 can move ahead and backward corresponding to a rotational direction and a rotational angle of the feeding screw 15.

In addition, all the length of the stopper projections 23a, 23b is formed to be slightly longer than a width of the pickup 16 in relation to the transferred direction. Therefore, even if the pickup 16 is excessively transferred due to an excessive rotation of the feeding screw 15 or an external force, the stopper projections 23a, 23b firstly abuts against the bearing portions 22a, 22b so as to prevent the pickup 16 itself from severely bumping against the other parts. Moreover, the constructions other than the above described, of course, may be employed under the aim of preventing the pickup 16 from bumping against the other parts.

In sum, according to the transferring mechanism of the present invention, the tooth portions 24, 25 can be prevented from deviating out of the helical groove since the interval D2 between the regulating portion 21 and the ridge surface of the feeding screw 15 is set to be shorter than the depth P of the helical groove of the feeding screw 15 as shown in Fig. 3A.

Further, even while the turning force of the feeding screw 15 is transferring the pickup 16 and the feeding screw 15 is about to be displaced or transformed due to an external sever shock, the feeding screw 15 can be regulated by the regulating portion 21 within the range of the interval D2. Namely, the feeding screw 15 is not displaced exceeding the interval D2. Therefore, it is avoided that the tooth portions 24, 25 get stuck on the ridge of the helical groove, that is, the tooth portions 24, 25 are always engaged with the helical groove. Thus, according to the present invention, it becomes possible to previously prevent the phenomenon that the tooth portion gets stuck on the feeding screw due to an external shock from occurring, which was a sever problem in the prior arts. In the other words, the present invention can provide a transferring mechanism robust against the shock from the outside.

In addition, it becomes possible to manufacture a light weight of feeding screw. Namely, even if the light weight of feeding screw 15 is relatively apt to be transformed comparing with one before light weighted, a displacement caused by the transformation can be previously prevented by the regulating portion 21. Therefore, the engaging between the tooth portions 24, 25 and the helical groove is always kept so that the turning force of the feeding screw 15 can be constantly transmitted to the pickup 16.

If the feeding screw 15 is lightened, a load exerted upon the stepping motor 17 can be reduced, so that the pickup 16 instead can be transferred at higher speed. Thus, it is possible to realize a information recording and reproducing system capable of reading and recording a large capacity of optical disc at high speed.

Further, according to the construction of the present invention, the feeding screw 15 passes through the concave guide hole 27 which is formed by the tip portion 20a of the engaging portion 20, the bridging portion 26 and the regulating portion 21. Within just this range of the concave guide hole 27, the tooth portions 24, 25 are engaged with the helical groove. Therefore, the load exerted upon the stepping motor 17 can be reduced on this point also, which allows assembling steps to be simplified.

If employed is the construction in which the feeding screw is inserted in a cylindrical transmitting member (not shown) as prior arts, that is, substantially all periphery of the feeding screw contacts with an inner wall of the transmitting member, the load exerted on the stepping motor 17 is very large, and further the assembling steps becomes complicated since the feeding screw has to be inserted into the cylindrical transmitting member. On the other hand, in the present invention, the helical groove is engaged with the tooth portions 24, 25 only so that the feeding screw 15 can rotate smoothly with little load. Also, the assembling steps can be simplified since it is required only to insert the feeding screw 15 into the concave guide hole 27 in order to assemble the engaging portions.

Moreover, although the tooth portions 24, 25 are provided on the tip portion 20a of the engaging portion 20 in the above described embodiment, the tooth portions 24'. 25' may be provided in the side of regulating portion 21 as shown in Fig. 3B. In this case, while the regulating portion 21 becomes a base on which the tooth portions 24', 25' are formed, the tip portion 20a performs a function for regulating a displacement of the feeding screw 15. Further, as shown in Fig. 3C, the tooth portions 24, 25, 24', 25' may be formed on both sides of the tip portion 20a and regulating portion 21.

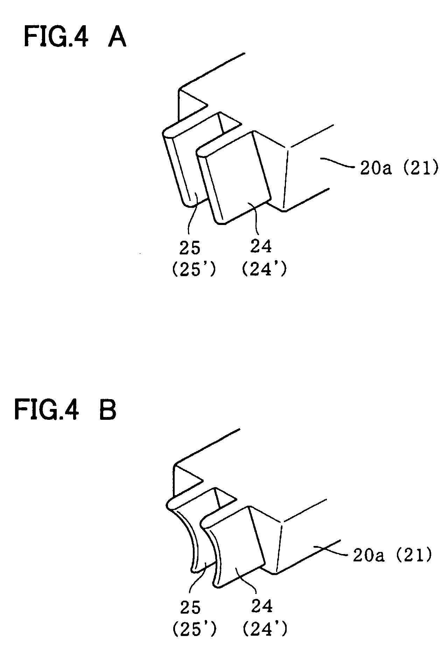

In addition, although a shape of the tooth portions 24, 25 and/or 24', 25' is designed as a plane, and the tip of the tooth portion is allowed to be substantially in point contact with a bottom surface of the helical groove in the present embodiment as shown in Fig. 4A, the present invention is not limited to this embodiment. Namely, as shown in Fig. 4B, the tip of the tooth portion may be formed as an arcuate shape being concave in an inner direction, wherein the tip of the tooth portion is allowed to be substantially in plane or line contact with the bottom surface of the helical groove of the feeding screw 15.

Moreover, the number of the tooth portion may be freely determined according to the design of the engaging portion.

In the present embodiment, the information recording and reproducing system mainly using CD and DVD as an information recording and reproducing medium was explained, but the present invention can be applied to the information recording and reproducing system using MD as an information recording and reproducing medium also.

Also, the stepping motor 17 for driving the feeding screw 15 may be replaced with the other motor, for example, a direct current motor, which can transfer the pickup.

While the invention has been described in conjunction with preferred specific embodiment thereof, it will be understood that this description is intended to illustrate and not limit the scope of the invention,

## Claims

1. A system (9) for recording and reproducing information, having at least one of information reading means (16) for reading information from an information recording and reproducing medium and information recording means (16) for recording information on the information recording and reproducing medium, and transferring means (18) for transferring at least one of the information reading means (16) and the information recording means (16) and for changing a position thereof to the information recording and reproducing medium, the transferring means (18) comprising:
- a feeding screw (15) having a helical groove on a peripheral surface thereof with a cylindrical shape;
- an engaging portion (20) for engaging with the helical groove of the feeding screw (15); and
- a regulating portion (21) for regulating a displacement of the feeding screw (15) caused by engaging with the engaging portion (20).

2. The system (9) according to claim 1,
wherein the regulating portion (21) is disposed on the opposite side to the engaging portion (20) through the feeding screw (15).

3. The system (9) according to claim 1 or 2,
wherein the regulating portion (21) and the feeding screw (15) are disposed with a predetermined interval (27, D2) between them.

4. The system (9) according to claim 3,
wherein the interval (27, D2) between the regulating portion (21) and the feeding screw (15) is set to be shorter than a depth (P) of the helical groove.
